Europäisches Patentamt

European Patent Office

Office européen des brevets

(19)

(11) Publication number: **0 084 410**
A2

(12)

# EUROPEAN PATENT APPLICATION

(21) Application number: 83300034.2

(22) Date of filing: 05.01.83

(51) Int. Cl.³: **B 01 D 53/18**

(30) Priority: 19.01.82 GB 8201435
25.01.82 GB 8201957

(43) Date of publication of application:
27.07.83 Bulletin 83/30

(84) Designated Contracting States:
AT BE DE FR GB IT NL SE

(71) Applicant: IMPERIAL CHEMICAL INDUSTRIES PLC
Imperial Chemical House Millbank
London SW1P 3JF(GB)

(72) Inventor: Toms, Derek John
41 Newton Lane
Chester Cheshire(GB)

(74) Representative: Virr, Dennis Austin et al,
Imperial Chemical Industries PLC Legal Department:
Patents Thames House North, Millbank
London SW1P 4QG(GB)

(54) The removal of hydrogen sulphide from gas streams.

(57) Hydrogen sulphide is removed from a gas stream by contacting the gas stream with an aqueous alkanolamine solution in a high surface area rotor in which the solution is subjected to an acceleration greater than that due to gravity.

Fig. 2

EP 0 084 410 A2

Croydon Printing Company Ltd.

### The removal of hydrogen sulphide from gas streams

THIS INVENTION is concerned with the removal of hydrogen sulphide from gas streams and is an improved process for that purpose.

When hydrogen sulphide is present in gaseous streams, such as in natural gas or in synthesis gas or during the manufacture of synthetic fuel gases such as town gas and producer gas or in streams arising from coal gasification, it is essential that it be removed down to a low concentration level. It is an acidic, highly corrosive gas and normal pipeline specifications for gas destined for domestic consumption require very low concentrations of hydrogen sulphide, for example less than 6 mg./m$^3$ of gas. Moreover, if a hydrocarbon stream is to be used as a feedstock for a chemical reaction, hydrogen sulphide in the stream may poison any catalyst used in the reaction. Consequently, many methods have been devised for the so-called "sweetening" of gas, that is for the removal of hydrogen sulphide and other acid gases therefrom.

One such sweetening process entails treating the stream of gas containing hydrogen sulphide with an aqueous solution of an amine with which the hydrogen sulphide reacts. In this way, the hydrogen sulphide is largely removed into the aqueous solution, leaving only a very low concentration in the original gas stream. The aqueous solution is regenerated for re-use, and the hydrogen sulphide is recovered if desired, by steam stripping of the solution. Suitable amines which have been used for this purpose include monoethanolamine, diethanolamine and di-isopropanolamine, which may be used alone or in admixture with each other and/or with other amines or other compounds.

While the amine-based sweetening process, especially that using monoethanolamine, has been widely adopted and has proved to be quite successful in practice, sweetening processes in general frequently entail large gaseous throughputs and therefore any process improvement which makes possible the use of smaller gas treatment plant is highly desirable. In particular, where natural gas is produced in off-shore wells and hydrogen sulphide is to be removed by treatment on a production platform at the well-head, the weight and volume of the treatment plant are critical factors in determining both the feasibility of well-head treatment and the overall design of the rig.

Accordingly, we have devised a gas sweetening process in which the treatment is "intensified" in a way which enables the use of significantly smaller, and therefore lighter-weight, equipment.

The process according to the present invention for the removal of hydrogen sulphide from a gas stream is an improvement of the known process in which the hydrogen sulphide is contacted with an aqueous solution of an alkanolamine. The improvement comprises contacting the gas stream with the aqueous alkanolamine solution in a high surface area rotor rotating at such a speed as to subject the solution to an acceleration, expressed in a direction radial with respect to the axis of rotation, which is greater than the acceleration due to gravity, for example many times that due to gravity.

Carrying out the gas treatment in a high surface area rotor and under enhanced acceleration in the way required by our invention increases the mass transfer rate as compared with treatment in the static apparatus heretofore employed and, because the absorption of hydrogen sulphide into aqueous alkanolamine is mass-transfer limited, greatly increases the capacity of the rotary apparatus as compared with the conventional static apparatus. Thus, for a given volume of gas to be treated in unit time, it is possible to use much smaller apparatus.

A further advantage of the process according to our invention is that, because the gas treatment is "intensified" and use of smaller apparatus made possible, the operation requires smaller inventories of reactants.

Where the gas treated is a flammable hydrocarbon, the reduction in inventory is an important advantage from the safety point of view.

The known alkanolamine process is also used for absorption of carbon dioxide from gaseous streams. Thus, when applied to gas streams containing both hydrogen sulphide and carbon dioxide, the conventional process may remove both gases simultaneously. In some situations, however, it is desirable to be able to remove the hydrogen sulphide without simultaneously removing significant quantities of carbon dioxide. For example, if the hydrogen sulphide is to be used as a source of elemental sulphur, e.g. via the Claus reaction, it is important that the hydrogen sulphide content of the acid gas fed to the Claus reactor be at least 35 mole per cent. Thus if the gas treatment were able to remove hydrogen sulphide selectively, then the concentration of hydrogen sulphide in the removed gas would be enhanced and its suitability as a Claus feed stream would be improved. In addition, a gas treatment which is selective for hydrogen sulphide opposite carbon dioxide would be suitable for applying to the off-gas from a Claus reactor (the so-called "Claus tail gas") to enable recycle of residual hydrogen sulphide with minimum carbon dioxide recycle. The absorption rate of carbon dioxide into aqueous alkanolamine is controlled by the rate of reaction of some of the stages in the subsequent liquid-phase reaction of dissolved carbon dioxide and alkanolamine and is therefore not significantly enhanced by the use of a high surface area rotor and elevated acceleration. Thus use of the process of the present invention improves hydrogen sulphide absorption while not improving carbon dioxide absorption to any significant extent and thereby significantly improves the selectivity of the absorption process towards hydrogen sulphide removal. The process is therefore of especial value where separation of the hydrogen sulphide and the carbon dioxide is an aim of the treatment, for example where removal of hydrogen sulphide only, or preferentially, is desired.

It is believed that, in addition to improving the selectivity for hydrogen sulphide opposite carbon dioxide, the process according to the present invention will also improve the selectivity for hydrogen sulphide opposite any saturated hydrocarbons present in the gas treated. In this way, the concentration of hydrocarbons in the product hydrogen sulphide would be reduced. This is an important consideration if the hydrogen sulphide is to be used in the production of elemental sulphur, as hydrocarbons present at that stage may lead to contamination of the sulphur product with carbon.

The aqueous alkanolamine solution with which the gas is contacted according to the present invention is a solution of one or more of any of those alkanolamines with which hydrogen sulphide reacts. Thus the alkanolamine may if desired be a tertiary alkanolamine, for example methyl diethanolamine; a secondary alkanolamine, for example methyl monoethanolamine or more especially a dialkanolamine such as diethanolamine or di-isopropanolamine; a monoalkanolamine such as monoethanolamine or diglycolamine; a mixture of two or more alkanolamines; or a mixture of an alkanolamine with another compound, for example of di-isopropanolamine with sulpholane as in the "Sulfinol" process. The choice of alkanolamine depends, as is known in the art, primarily upon the nature of the gas to be treated. Thus diethanolamine is likely to be preferred for gases containing higher contents of hydrogen sulphide and carbon dioxide (say perhaps 15 to 35 mole per cent of these gases combined) or containing carbonyl sulphide or carbon disulphide; in other situations, especially in the absence of these two last-named compounds or where the total acid gas content is lower (say perhaps below 15 mole per cent), monoethanolamine is often preferred. Methyl diethanolamine is often the preferred amine when high selectivity towards hydrogen sulphide opposite carbon dioxide is an important consideration.

The concentration of the alkanolamine aqueous
solution will depend upon the alkanolamine employed.
Typically used concentrations are:-

| | |
|---|---|
| Monoethanolamine | about 15 per cent by weight |
| Diethanolamine | 20 to 30 per cent by weight |
| Di-isopropanolamine | 25 to 30 per cent by weight |
| Methyl diethanolamine | 25 to 55 per cent by weight |
| Diglycolamine | about 70 per cent by weight |

As indicated, the process of the present
invention is applied to gases containing hydrogen sulphide
and optionally carbon dioxide. An important application
is in the treatment of hydrocarbon streams, especially
natural gases, containing hydrogen sulphide. The gas
treated may contain as little as 1 or 2 mole per cent of
hydrogen sulphide or as much as 30 or 40 mole per cent
or more. For example, it may contain 15 mole per cent of
hydrogen sulphide and 15 mole per cent of carbon dioxide.
The process is also of special value in treating the tail-
gas from a Claus reactor, which contains both hydrogen
sulphide and carbon dioxide and where the enhanced
selectivity for hydrogen sulphide of the present process
enables re-cycling of hydrogen sulphide without undue
build-up of carbon dioxide in the Claus process.

A further application of the process according
to the present invention is for enhancing the hydrogen
sulphide content of a gas stream which before treatment
contains too low a concentration of hydrogen sulphide for
it to be used as a Claus reaction feedstock. By treatment
according to the invention, the concentration of hydrogen
sulphide may be raised sufficiently, that is to at least
35 mole per cent, for the gas to be used satisfactorily for
Claus feedstock.

The present process is also useful for treating
refinery streams containing hydrogen sulphide and optionally
carbon dioxide and/or other undesired gases, or similar
streams arising in the course of coal gasification, both to
remove hydrogen sulphide and also for the purpose of recovering that product as a source of sulphur.

In yet a further application of the process according to the present invention, it is employed for removing hydrogen sulphide from carbon dioxide as another main component. A relatively recent use of carbon dioxide is its injection into oil formations to enhance the recovery of the liquid hydrocarbons therein. However for this use it is necessary that its content of hydrogen sulphide be small. The present invention may be used to extract hydrogen sulphide selectively (for example by using methyl diethanolamine as the alkanolamine) from a gas containing both hydrogen sulphide and carbon dioxide, whereafter the residual gas is treated for the removal of carbon dioxide. The latter treatment may be a similar amine treatment, for example with diethanolamine, or a different physical or chemical process for carbon dioxide removal, for example using alkaline carbonate (e.g. potassium carbonate) solution.

The quantity of alkanolamine solution with which the gas is treated depends upon many factors, including the choice of alkanolamine and the composition of the gas. As a general guide-line, the molar ratio of acid gas (that is hydrogen sulphide plus any carbon dioxide) to alkanolamine solution might usefully lie in the range 0.1 to 0.9, although ratios outside these limits are also possible.

The contact of gas and aqueous alkanolamine solution is enhanced by the use of the high surface area rotor. The average surface area of the rotor may usefully be at least 30 $m^2/m^3$, for example 100 to 500 $m^2/m^3$ and may advantageously be greater than 1,000 $m^2/m^3$, especially greater than 1,500 $m^2/m^3$.

The high surface area rotor may take any of a variety of forms. Some such rotors are described in our published European Patent Specifications Nos. 0,002,568, 0,020,055 and 0,023,745 and in numerous, as yet unpublished, pending UK patent specifications which we

0084410

have filed.

More specifically, the high surface area rotor may for example consist of a plurality of axially-spaced discs, each lying at right angles to the axis of rotation of the rotor. Such discs may be of metal, for example stainless steel, and may be self-supporting or supported. Typically, such discs may be of the order of 0.05 to 2.0 mm, especially 0.25 to 1.0 mm, thickness and may be spaced about 0.5 to 5 mm, especially 0.5 to 2 mm, apart.

Another suitable form of rotor consists of a plurality of plates, generally radially disposed in planes parallel to the axis of rotation or disposed at an angle to such planes and/or to the radius. Such plates may be of the order of 0.05 to 2.0 mm, especially 0.25 to 1.0 mm, thickness and may be spaced apart by a distance of the order of 0.5 to 5 mm, especially 0.5 to 2 mm, at their nearest points, which distance may vary with distance from the axis of rotation.

A further form of rotor comprises a permeable element, which may be of unitary construction or assembled, if desired in situ, from a plurality of parts or layers. Thus the element may be of knitted or woven cloth, for example metal cloth; a crumpled mesh; a random or ordered mat or other mass of fibres, for example metallic fibres, which may if desired be strengthened by sintering or adhesive bonding; a sintered mass of metal particles; or a reticulated foam. Specific examples of suitable materials include the knitted metal cloth sold under the trade mark "Knitmesh", which may for example be wound in layers about a support at the axis of rotation of the rotor, and metallic skeletal foams, for example the product sold under the trade mark "Retimet", which may conveniently be assembled in layers to form the permeable element.

The material of which the rotor and associated equipment are made is a matter for careful choice depending upon reaction conditions and reactant concentrations, if corrosion of the equipment is to be successfully avoided or minimised.  However, much data is available to assist the choice, based in particular upon experience gained in the operation of conventional amine processes.  In general, under milder reaction conditions and lower concentrations of acid gas and alkanolamine, mild steel may be suitable, while under more severe conditions and higher concentrations, it may well prove necessary to employ a stainless steel.  "Retimet" skeletal foam is readily available in nickel-chromium alloy and is suitable for the present purpose in that material.

The rotor is rotated at such a speed as to subject the aqueous alkanolamine solution to an acceleration, expressed in a radial direction, which is greater than that due to gravity.  Since the radial acceleration to which the solution is subjected varies with the distance from the axis of rotation, it is convenient to refer to the mean acceleration ($a_m$), which is defined by the equation:

$$a_m = \left( \frac{2\pi N}{60} \right)^2 \left( \frac{r_o^2 + r_1^2}{2} \right)^{\frac{1}{2}}$$

where N is the rotational speed of the rotor in revolutions per minute, $r_o$ is the distance from the axis of the radially innermost part of the high surface area rotor and $r_1$ is the distance from the axis of the radially outermost part of said rotor.  The mean acceleration to which the alkanolamine solution is subjected is preferably at least 300 m sec$^{-2}$, especially at least 1000 m sec$^{-2}$ and may advantageously be as high as 10,000 m sec$^{-2}$.  Thus in terms of the acceleration due to gravity (g), the mean acceleration may amount to 30 g or 100 g or 1,000 g or more.

The invention will now be further described by reference to the accompanying drawings, in which

Fig. 1 is a simple block diagram representing the process according to the present invention;

Fig. 2 is a vertical sectional view of a form of rotary apparatus suitable for use in practising the process according to the present invention; and

Fig. 3 is a vertical sectional view of an alternative form of suitable rotary apparatus.

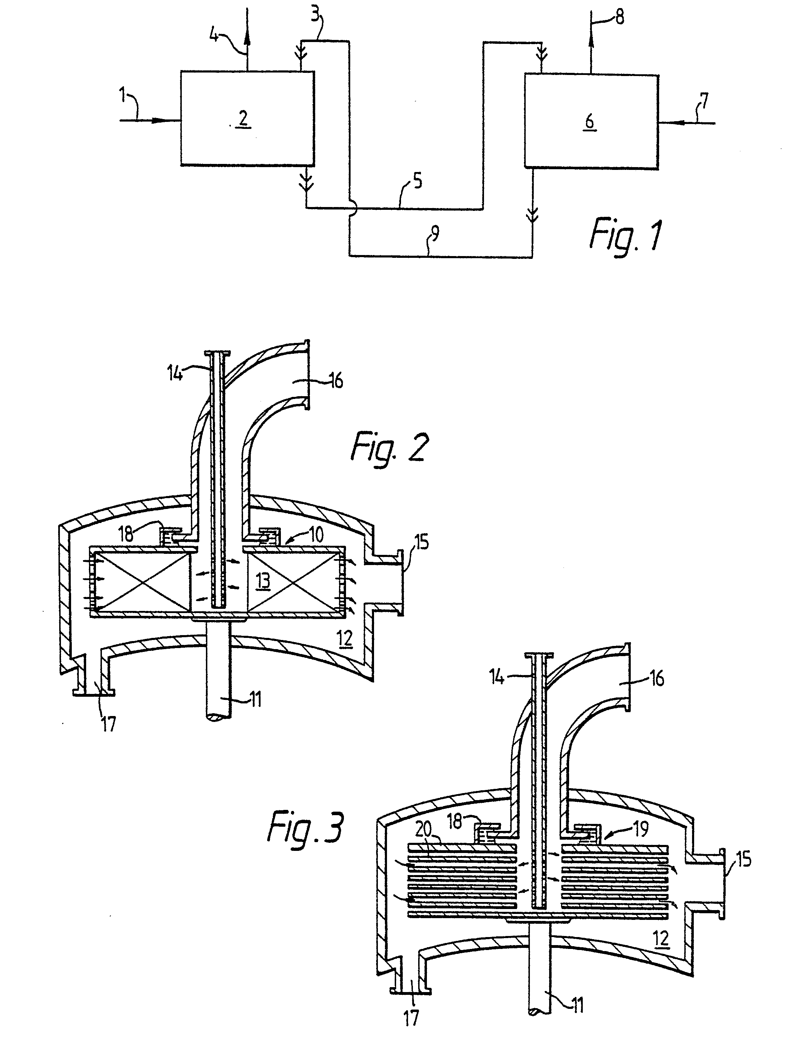

In Fig. 1, lines with single arrows represent gas or vapour lines and lines with double arrows represent liquid lines. A gas stream containing hydrogen sulphide is fed via line 1 to a rotary gas absorber 2 in which it is contacted in a high surface area rotor with an aqueous alkanolamine solution fed to the gas absorber 2 via line 3. In accordance with the present invention, the rotor is rotated at such a speed as to subject the solution to a centrifugal acceleration which is a multiple of that due to gravity, for example about 100 times that due to gravity.

A major proportion of the hydrogen sulphide dissolves, with reaction, in the alkanolamine solution and the resulting gas of reduced hydrogen sulphide content is led from the gas absorber 2 via line 4. Aqueous alkanolamine solution containing hydrogen sulphide is discharged from the gas absorber 2 via line 5, by which it is led to a solvent regenerator 6. In the regenerator 6, the hydrogen sulphide is removed from the aqueous alkanolamine solution by steam stripping, the steam being introduced to the regenerator 6 via line 7. The hydrogen sulphide is discharged via line 8, from which it may, if desired, be conveyed direct to suitable plant (not shown), for example a Claus reactor, for converting it to elemental sulphur. The regenerated aqueous alkanolamine solution is conveyed via line 9 back to the gas absorber 2 for re-use.

The solvent regenerator 6 may be of a conventional design, such as has heretofore been employed for regenerating aqueous alkanolamine solution by stripping hydrogen sulphide therefrom. Alternatively, and with advantage in circumstances where the volume and/or weight of the apparatus is an important consideration, the solvent regenerator may be a rotary device similar to the gas absorber 2. Thus absorber 2 and optionally solvent regenerator 6 may if desired be rotary apparatus such as is illustrated in Fig. 2 or Fig. 3.

Referring now to Fig. 2, a rotor designated generally 10 is carried on a shaft 11 by means of which it is rotated within a squat cylindrical chamber 12. The rotor 10 carries an annular permeable member 13, assembled from concentric layers of the metallic skeletal foam sold under the trade mark "Retimet". The skeletal foam in the illustrated embodiment is of a nickel-chromium alloy.

Aqueous alkanolamine solution is introduced via solvent feed pipe 14 and via apertures near the lower end of the pipe 14 to the inner cylindrical face of the permeable member 13, whence it permeates, under the centrifugal effect caused by the rotation of the rotor 10, through the pores of the member 13 towards its outer face. Within the member 13, the solution is subjected to a mean centrifugal acceleration of approximately 50 times the acceleration due to gravity.

Gas containing hydrogen sulphide is introduced to the chamber 12 via gas feed pipe 15 under sufficient pressure to cause it to enter the member 13 via its outer cylindrical face and to flow generally inwardly through the pores of the member 13 countercurrent to the flow of alkanolamine solution. By-passing of the member 13 by the gas is prevented by a liquid seal 18. Within the member 13, the gas/liquid contact takes place which leads to absorption of the hydrogen sulphide into the alkanolamine solution and reaction therewith. Gas of reduced hydrogen sulphide content leaves the inner face of the member 13 and is removed via gas discharge pipe 16. Alkanolamine solution containing hydrogen sulphide leaves the outer face of the member 13 and is withdrawn from chamber 12 via liquid discharge pipe 17.

In the alternative device illustrated in Fig. 3, like parts are designated by the numerals used in Fig. 2. The device of Fig. 3 differs from that of Fig. 2 in that the rotor 19 is in the form of a stack of axially-spaced disc-shaped plates 20. In the drawings, for the sake of clarity, only a few plates are shown; however the plates 20 in the illustrated embodiment are in fact 1 mm thick and spaced 1 mm apart. Thus in a stack of plates of, say, 75 mm axial length there are 38 plates.

The device of Fig. 3 operates in substantially the same manner as that of Fig. 2, except that the gas/ liquid contact takes place upon the surfaces of the plates 20 and to some extent in the space between the plates.

Claims

1.      A process for removing hydrogen sulphide from a gas stream by contacting the gas stream with an aqueous solution of an alkanolamine, characterised in that said contacting is carried out in a high surface area rotor rotating at such a speed as to subject said solution to an acceleration, expressed in a direction radial with respect to the axis of rotation, which is greater than the acceleration due to gravity.

2.      A process according to claim 1, characterised in that the gas stream contains carbon dioxide.

3.      A process according to claim 1 or claim 2, characterised in that the gas stream contains one or more hydrocarbons.

4.      A process according to any preceding claim, characterised in that the rotor has a surface area of at least 30 $m^2/m^3$.

5.      A process according to claim 4, characterised in that the rotor surface area is greater than 1,000 $m^2/m^3$.

6.      A process according to any preceding claim, characterised in that the rotor consists of a plurality of axially-spaced discs, each lying at right angles to the axis of rotation of the rotor.

7.      A process according to any of claims 1 to 5, characterised in that the rotor consists of a plurality of plates, generally radially disposed in planes parallel to the axis of rotation of the rotor or at an angle to such planes and/or to the radius.

8.      A process according to any of claims 1 to 5, characterised in that the rotor comprises a permeable element.

9.      A process according to claim 8, characterised in that said permeable element is of knitted or woven metal cloth or of a metallic skeletal foam.

10.     A process according to any preceding claim, characterised in that the acceleration to which said aqueous solution is subjected is at least 300 m $sec^{-2}$.

11.     A process according to claim 10, characterised in that said acceleration is at least 1,000 m sec$^{-2}$.

12.     A process according to claim 1, characterised in that it comprises feeding a gas which contains hydrogen sulphide and carbon dioxide to a rotor having a surface area of greater than 1,000 m$^2$/m$^3$, feeding also to said rotor an aqueous solution of an alkanolamine in such quantity that the molar ratio of hydrogen sulphide and carbon dioxide to alkanolamine solution is in the range 0.1 to 0.9, rotating said rotor at such a speed as to subject said aqueous solution to an acceleration of at least 300 m sec$^{-2}$, and withdrawing from said rotor a liquid stream comprising an aqueous solution of said alkanolamine containing hydrogen sulphide and a gaseous stream of reduced hydrogen sulphide content.

1/1

Fig. 1

Fig. 2

Fig. 3